# EUROPEAN PATENT APPLICATION

(11) **EP 4 195 828 A1**
(43) Date of publication of application: **14.06.2023**
(21) Application number: 21853719.9
(22) Date of filing: 05.08.2021
(51) Int. Cl.: H04W 72/04, H04W 72/14

(54) **CHANNEL ACCESS METHOD FOR UNLICENSED SPECTRUM, AND TERMINAL AND NETWORK-SIDE DEVICE**

(30) Priority: 06.08.2020 CN 202010785754
(71) Applicant: Vivo Mobile Communication Co., Ltd., Dongguan, Guangdong 523863 (CN)
(72) Inventor: PAN, Xueming, Dongguan, Guangdong 523863 (CN); LI, Gen, Dongguan, Guangdong 523863 (CN); JIANG, Lei, Dongguan, Guangdong 523863 (CN)
(74) Representative: Murgitroyd & Company
(86) International application number: PCT/CN2021/110958
(87) International publication number: WO 2022/028545

(57) **Abstract**

This application discloses a channel access method for an unlicensed spectrum, a terminal, and a network side device. The method includes: executing, by a terminal, a first event, where the first event is that the terminal receives a channel access parameter configured by a network side device for an unlicensed spectrum, or the first event is that the terminal obtains a channel occupancy status of the network side device for the unlicensed spectrum; performing, by the terminal, channel access for the unlicensed spectrum based on the first event; and sending, by the terminal, a sidelink SL signal and/or Uu signal in a case that the channel access for the unlicensed spectrum succeeds.

## Description

### CROSS-REFERENCE TO RELATED APPLICATION

This application claims priority to Chinese Patent Application No. 202010785754.8 filed in China on August 6, 2020, which is incorporated herein by reference in its entirety.

### TECHNICAL FIELD

This application belongs to the field of communication technologies, and in particular, relates to a channel access method for an unlicensed spectrum, a terminal, and a network side device.

### BACKGROUND

In current communication technologies, channel access is usually performed on licensed bands. However, with the development of communication technologies, available licensed bands become increasingly less, resulting in limited flexibility of available licensed bands.

### SUMMARY

Embodiments of this application provide a channel access method for an unlicensed spectrum, a terminal, and a network side device, to resolve the problem that the flexibility of available licensed bands is limited because available licensed bands in the prior art become increasingly less.

According to a first aspect, a channel access method for an unlicensed spectrum is provided, including: executing, by a terminal, a first event, where the first event is that the terminal receives a channel access parameter configured by a network side device for an unlicensed spectrum, or the first event is that the terminal obtains a channel occupancy status of the network side device for the unlicensed spectrum; performing, by the terminal, channel access for the unlicensed spectrum based on the first event; and sending, by the terminal, a sidelink SL signal and/or a Uu signal in a case that the channel access for the unlicensed spectrum succeeds.

According to a second aspect, a channel access apparatus for an unlicensed spectrum is provided, including: an execution module, configured to execute a first event, where the first event is that a terminal receives a channel access parameter configured by a network side device for an unlicensed spectrum, or the first event is that the terminal obtains a channel occupancy status of the network side device for the unlicensed spectrum; an access module, configured to perform channel access for the unlicensed spectrum based on the first event; and a first sending module, configured to send a sidelink SL signal and/or a Uu signal in a case that the channel access for the unlicensed spectrum succeeds.

According to a third aspect, a channel access method for an unlicensed spectrum is provided, applied to a network side device and including: initiating, by the network side device, channel access for an unlicensed spectrum, or configuring a channel access parameter of the unlicensed spectrum for a terminal.

According to a fourth aspect, a channel access apparatus for an unlicensed spectrum is provided, including: a processing module, configured to: initiate channel access for an unlicensed spectrum, or configure a channel access parameter of the unlicensed spectrum for a terminal.

According to a fifth aspect, a terminal is provided. The terminal includes a processor, a memory, and a program or instructions stored in the memory and executable on the processor. When the program or instructions are executed by the processor, the steps of the method according to the first aspect are implemented.

According to a sixth aspect, a network side device is provided. The network side device includes a processor, a memory, and a program or instructions stored in the memory and executable on the processor. When the program or instructions are executed by the processor, the steps of the method according to the third aspect are implemented.

According to a seventh aspect, a readable storage medium is provided. The readable storage medium stores a program or instructions. When the program or instructions are executed by a processor, the steps of the method according to the first aspect or the steps of the method according to the third aspect are implemented.

According to an eighth aspect, a chip is provided. The chip includes a processor and a communication interface, where the communication interface is coupled to the processor, and the processor is configured to run a program or instructions of a network side device to implement the method according to the first aspect or the method according to the third aspect.

In the embodiments of this application, a terminal may perform channel access for an unlicensed spectrum by receiving a channel access parameter configured by a network side device for an unlicensed spectrum, or perform the channel access for the unlicensed spectrum by obtaining a channel occupancy status of the network side device for the unlicensed spectrum, and then send an SL signal and/or a Uu signal, to implement the channel access for the unlicensed spectrum, and increase available spectrum resources. This resolves the problem that the flexibility of available licensed bands is limited because available licensed bands in the prior art become increasingly less.

### BRIEF DESCRIPTION OF DRAWINGS

FIG. 1 is a schematic diagram of an operation in which frame-based equipment (Frame Based Equipment, FBE) is used as an initiating node according to an embodiment of this application;
FIG. 2 is a schematic diagram of data transmission directly performed on a physical layer between user equipment (User Equipment, LTE) according to an embodiment of this application;
FIG. 3 is a block diagram of a wireless communication system to which the embodiments of this application are applicable;
FIG. 4 is a first flowchart of a channel access method for an unlicensed spectrum according to an embodiment of this application;
FIG. 5 is a schematic diagram of sending an SL signal and/or a Uu signal according to an embodiment of this application;
FIG. 6 is a schematic diagram of a terminal sharing channel occupancy time (Channel Occupancy Time, COT) with a network side device according to an embodiment of this application;
FIG. 7 is a schematic diagram of a terminal sharing COT with another terminal according to an embodiment of this application;
FIG. 8 shows a quantity of carriers or listen before talk (Listen Before Talk, LBT) sub-bands shared by a terminal with a network side device and/or numbers of the carriers or LBT sub-bands according to an embodiment of this application;
FIG. 9 shows a quantity of carriers or LBT sub-bands shared by a terminal with another terminal and/or numbers of the carriers or LBT sub-bands according to an embodiment of this application;
FIG. 10 is a second flowchart of a channel access method according to an embodiment of this application;
FIG. 11 shows a network side device sharing different COT with a terminal according to an embodiment of this application;
FIG. 12 is a first schematic structural diagram of a channel access apparatus for an unlicensed spectrum according to an embodiment of this application;
FIG. 13 is a second schematic structural diagram of a channel access apparatus for an unlicensed spectrum according to an embodiment of this application;
FIG. 14 is a schematic structural diagram of a communication device according to an embodiment of this application;
FIG. 15 is a schematic diagram of a hardware structure of a terminal according to an embodiment of this application; and
FIG. 16 is a schematic structural diagram of a network side device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

In the specification and claims of this application, the terms such as "first" and "second" are intended to distinguish between similar objects but do not necessarily indicate a specific order or sequence. It should be understood that terms used in such a way is interchangeable in appropriate circumstances so that the embodiments of this application can be implemented in an order other than the order illustrated or described herein. Moreover, "first" or "second" is used to distinguish typically objects of one type without limiting a quantity of these objects. For example, there may be one or more first objects. In addition, in the specification and claims, "and/or" represents presence of at least one of connected objects, and the symbol "/" in this specification usually indicates an "or" relationship between associated objects.

### Channel access for an unlicensed band

In an unlicensed band, before sending information, a terminal or network side device needs to perform clear channel assess (Clear Channel Assess, CCA)/extended clear channel assess (extended Clear Channel Assess, eCCA) to monitor a channel, that is, to perform energy detection (Energy Detection, ED). Transmission can be started only when energy is less than a certain threshold and thus the channel is determined to be idle, that is, in load-based equipment (Load-Based Equipment, LBE) mode. Because the unlicensed band is shared by a plurality of technologies or transmission nodes, such competition-based access mode leads to the uncertainty of channel available time. When the channel is available, a transmissible position for transmission of a signal on a network side may have been missed and thus the signal cannot be transmitted. As a result, a receive end may be unable to: normally receive a signal configured on the network side, or perform, according to configuration on the network side after receiving the signal, terminal behaviors such as physical downlink control channel (Physical Downlink Control Channel, PDCCH) monitoring, monitoring and measurement on a wireless environment, and the like. A process of determining whether the channel is idle and performing transmission via CCA may be referred to as a channel access process.

At present, there are three channel access processes which are applicable to a 5G unlicensed communication system:
Cat 1: direct transmission without any CCA, which can be used only when the channel has been obtained and a transmission conversion interval is less than 16 µs.
Cat 2 (Type II): 16 µs or 25 µs channel listening, which may be used for a specific signal to obtain a channel, where a maximum continuous transmission length should be less than a certain value, such as 1 ms.
Cat 4 (Type I): channel listening with random back-off, where different parameters are set for different priorities, and maximum transmission lengths after the channel is acquired finally are different.

In addition, a frequency domain granularity of CCA on 5 GHz is 20 MHz, and the processes are strictly implemented according to channel planning in regulation (Regulation).

### Frame-based equipment (Frame Based Equipment, FBE) network operation

FBE means that a periodic structure is used for sending/receiving timing of a device, and a period of the FBE is a fixed frame period.

An FBE node uses a listen before talk (Listen Before Talk, LBT)-based channel access mechanism to occupy a channel. A node that initiates a transmission sequence that includes one or more consecutive transmissions is referred to as an initiating node (Initiating Device), and another node is referred to as a responding node (Responding Device). The FBE node may be an initiating node or a responding node, or support functions of both the two nodes.

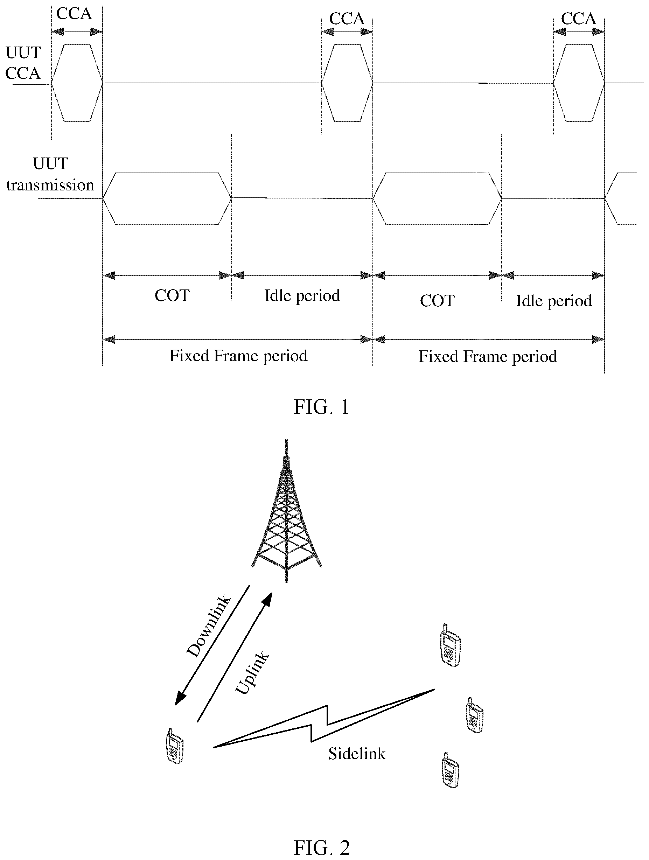

For an example of an operation of the initiating node, reference may be made to FIG. 1. Operation requirements include:
A fixed frame period value set supported by the node is stated by a device manufacturer, and all values are required to be within a range of 1 ms to 10 ms. Transmission can only be started at start time of a fixed frame period. The node can change a fixed frame period that is currently used by the node, but a changing frequency cannot be higher than 200 ms each time.

Before starting transmission at a start moment of a specific fixed frame period, the initiating node performs CCA. If it is determined that the fixed frame period is idle, the fixed frame period may be sent immediately. Otherwise, sending is not allowed in a following fixed frame period (except short control signaling transmissions (Short Control Signaling Transmissions) stipulated in supervision requirements). In other words, before transmission, the initiating node needs to perform one-shot LBT, namely, Cat.2 LBT.

In a fixed frame period in which sending has started, total duration in which a corresponding initiating node can perform transmission without re-estimating availability of a channel is defined as channel occupancy time (Channel Occupancy Time, COT). The initiating node may perform transmission for a plurality of times on a specified channel within the COT without performing additional CCA, provided that a time interval between adjacent transmissions in these transmissions does not exceed 16 µs. If a time interval between adjacent transmissions in the COT exceeds 16 µs, before continuing transmission, the initiating node needs to perform additional CCA, and continue transmission only when determining, through the CCA, that the channel is idle. Time intervals between all adjacent transmissions are included in the COT.

The initiating node may grant use rights of a specified channel in some periods of time in the COT to one to more associated responding nodes for transmission.

The COT cannot be longer than 95% of the fixed frame period, and is immediately followed by an idle period (Idle Period) after the COT. The idle period lasts until a start moment of a next fixed frame period. In this way, a length of the idle period is at least 5% of the fixed frame period, and a minimum value is 100 µs.

After correctly receiving a data packet for a node, the node may directly transmit, without performing CCA, a management and control frame (for example, an ACK frame) corresponding to the data packet on a specified channel. This node needs to ensure that these consecutive transmitted frames do not exceed the above-mentioned maximum COT.

After receiving use rights, granted by an initiating node, of a specified channel in some periods of time, the responding node performs the following operations:
If the responding node initiates transmission after a maximum interval of 16 µs after the last transmission indicated and granted by the initiating node ends, the responding node does not need to perform CCA before performing transmission; otherwise, performs CCA before a granted transmission period starts. If it is determined that the channel is busy, the grant is discarded; otherwise, transmission may be started on the specified channel, at most a remaining part of COT in a current fixed frame period can be occupied, and multiple transmissions can be started in a time range of the remaining part, provided that a time interval between adjacent transmissions does not exceed 16 µs. After transmission is completed, the grant is discarded.

Both a long term evolution (Long TermEvolution, LTE) system and an NR system support sidelink (Sidelink, also referred to as sidelink, sidelink, sidelink, or the like) transmission, and are used to perform direct data transmission on a physical layer between user equipment (User Equipment, LTE), as shown in FIG. 2. An LTE sidelink performs communication via broadcasting. Although being applicable to basic safety-related communication that supports vehicle to everything (vehicle to everything, V2X), the LTE sidelink is inapplicable to other V2X services of a higher level. A 5G NR (New Radio) system supports a more advanced sidelink transmission design, such as a unicast design, a multicast design, or a groupcast design, thereby supporting services of more comprehensive types.

It should be noted that the technology described in the embodiments of this application is not limited to the long term evolution (Long Term Evolution, LTE) or LTE-Advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described may be used in the aforementioned systems and radio technologies, and may also be used in other systems and radio technologies. However, in the following descriptions, a new radio (New Radio, NR) system is described for an illustrative purpose, and NR terms are used in most of the following descriptions, although these technologies may also be applied to other applications than an NR system application, for example, the 6th generation (6^{th} Generation, 6G) communication system.

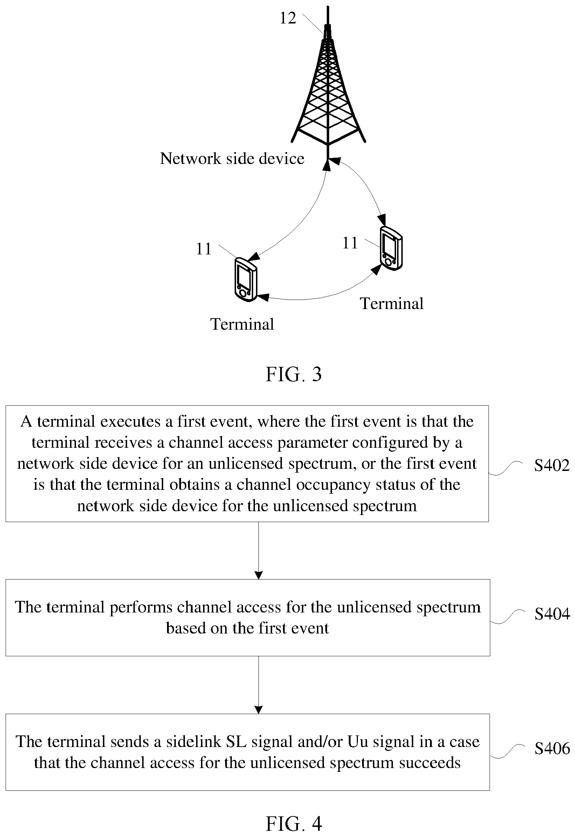

FIG. 3 is a block diagram of a wireless communication system to which the embodiments of this application are applicable. The wireless communication system includes a terminal 11 and a network side device 12. The terminal 11 may also be referred to as a terminal device or user equipment (User Equipment, UE). The terminal 11 may be a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (VUE), pedestrian user equipment (PUE), or another terminal side device. The wearable device includes a wristband, earphones, glasses, and the like. The wearable device includes a wristband, earphones, glasses, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved Node B (eNB), a home NodeB, a home evolved NodeB, a WLAN access point, a WiFi node, a transmission and reception point (Transmitting Receiving Point, TRP), or other appropriate terms in the art, provided that the same technical effects are achieved. The base station is not limited to specific technical terminology. It should be noted that in the embodiments of this application, a base station in the NR system is merely used as an example, which does not limit a specific type of the base station.

With reference to the accompanying drawings, the following describes in detail the channel access method for an unlicensed spectrum in the embodiments of this application based on specific embodiments and application scenarios thereof.

An embodiment of this application provides a channel access method for an unlicensed spectrum. The method is applied to a terminal. FIG. 4 is a first flowchart of the channel access method for an unlicensed spectrum according to an embodiment of this application. As shown in FIG. 4, the method includes the following steps.

Step S402: The terminal executes a first event, where the first event is that the terminal receives a channel access parameter configured by a network side device for an unlicensed spectrum, or the first event is that the terminal obtains a channel occupancy status of the network side device for the unlicensed spectrum.

Step S404: The terminal performs channel access for the unlicensed spectrum based on the first event.

Step S406: The terminal sends a sidelink SL signal and/or a Uu signal in a case that the channel access for the unlicensed spectrum succeeds.

According to the foregoing step S402 to step S406, a terminal may perform channel access for an unlicensed spectrum by receiving a channel access parameter configured by a network side device for an unlicensed spectrum; or the terminal may perform the channel access for the unlicensed spectrum by obtaining a channel occupancy status of the network side device for the unlicensed spectrum, and then send an SL signal and/or a Uu signal, to implement the channel access for the unlicensed spectrum, and increase available spectrum resources. This resolves the problem that the flexibility of available licensed bands is limited because available licensed bands in the prior art become increasingly less.

It should be noted that, in a specific application scenario, a mode, in this application, in which a terminal obtains a channel occupancy status of a network side device for an unlicensed spectrum may be: sending, by the network side device, control information to the terminal, where the control information is used to indicate whether the network side device occupies a channel of the unlicensed spectrum; or the mode may be: actively sending, by the terminal, a monitoring message to the network side device and feeding back, by the network side device, a responding message in response to the monitoring message, where the responding message is used to indicate whether the network side device occupies the channel of the unlicensed spectrum. Certainly, the foregoing modes are merely illustrative examples. In addition, in a specific application scenario, different obtaining modes may be used according to actual conditions.

In an optional implementation of this embodiment of this application, the terminal performs the channel access for the unlicensed spectrum based on the first event in any one of the following modes: load-based equipment LBE mode and frame-based equipment FBE mode.

It should be noted that different modes correspond to different channel access parameters. There are the following two specific modes:
(1) In a case that the channel access is performed in LBE mode, a required parameter is a first channel access parameter. Optionally, the first channel access parameter includes at least one of the following: clear channel assess CCA duration, contention window length, channel occupancy length, and energy detection ED threshold.
(2) In a case that the channel access is performed in FBE mode, the required parameter is a second channel access parameter. Optionally, the second channel access parameter includes at least one of the following: frame start position, frame offset, frame period length, clear channel assess CCA duration, channel occupancy length, idle period length, and energy detection ED threshold.

In other words, the channel access parameter in this embodiment of this application may include at least one of the following: the first channel access parameter and the second channel access parameter.

In another optional implementation of this embodiment of this application, the receiving a channel access parameter configured by a network side device for an unlicensed spectrum in the first event may further be: receiving the channel access parameter configured by the network side device for the unlicensed spectrum based on a working state of the terminal, where the working state includes an on-line working state and an off-line working state, and the channel access parameter configured based on the working state includes the first channel access parameter and/or the second channel access parameter.

In other words, the channel access parameter configured based on the working state may include only part or all of the first channel access parameter or only part or all of the second channel access parameter, or may include part or all of the first channel access parameter and the second channel access parameter. In a specific application scenario, if the first channel access parameter includes clear channel assess CCA duration, contention window length, and channel occupancy length, and the second channel access parameter includes frame start position, frame offset, frame period length, clear channel assess CCA duration, and channel occupancy length, the channel access parameter configured based on the working state may include only clear channel assess CCA duration and contention window length in the first channel access parameter, or may include only frame start position, frame offset, frame period length, and clear channel assess CCA duration in the second channel access parameter. Certainly, this is only an illustrative example. Specifically, which parameters in the first channel access parameter and/or the second channel access parameter are included may be configured according to an actual working state. In other words, the network side device may configure a corresponding channel access parameter for the terminal in a targeted manner, thereby avoiding waste of resources.

In another optional implementation of this embodiment of this application, the sending a sidelink SL signal and/or a Uu signal in this embodiment of this application includes at least one of the following:
(1) The terminal sends only the SL signal.
(2) The terminal sends the SL signal and the Uu signal in time division multiplexing (Time Division Multiplexing, TDM) mode. In other words, the SL signal may be sent before the Uu signal, or the Uu signal may be sent before the SL signal.

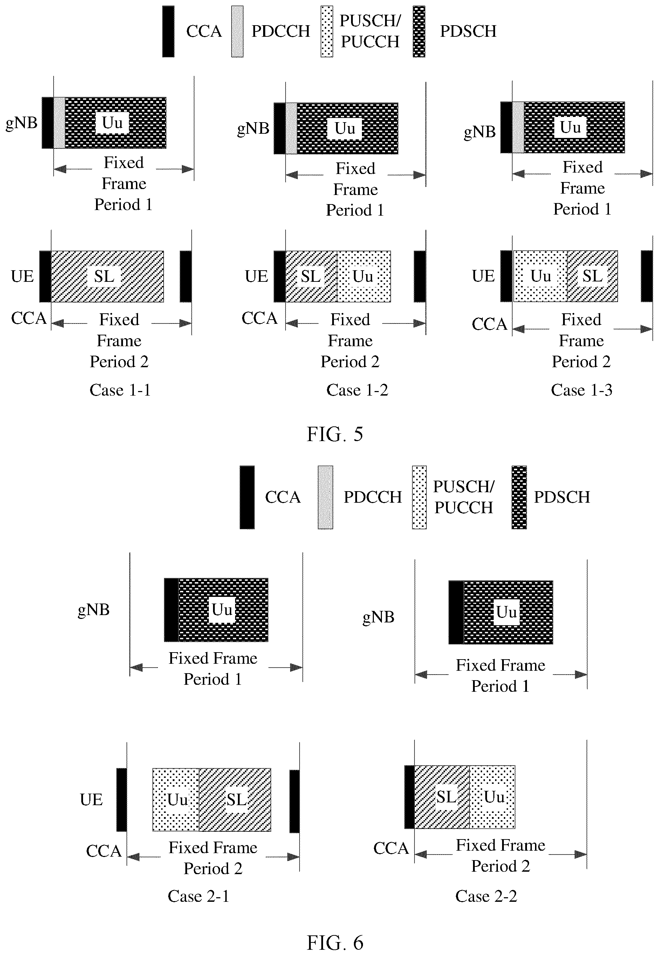

In a specific application scenario, the foregoing modes of sending the SL signal and/or Uu signal are as shown in FIG. 5. In a given FBE scenario, specific examples in which the UE performs active channel access are as follows:
Case 1-1: After accessing the channel, the UE sends only an SL signal in a frame period.
Case 1-2: After accessing the channel, the UE sends an SL signal and a Uu UL signal sequentially in the frame period.
Case 1-3: After accessing the channel, the UE sends a Uu UL signal and an SL signal sequentially in the frame period.

The foregoing case 1-2 and case 1-3 are two cases of sending the SL signal and the Uu signal in time division multiplexing TDM mode. It should be noted that ED thresholds in the above different examples are different. In addition, although FIG. 5 shows only examples in the FBE channel access scenario, the examples in which the LTE performs the active channel access are also applicable to an LBE channel access scenario.

In another optional implementation of this embodiment of this application, in the case that the channel access for the unlicensed spectrum succeeds, the method in this embodiment of this application further includes:
Step S408: The terminal obtains channel occupancy time COT.
Step S410: The terminal shares the COT with the network side device or another terminal.

A mode of sharing the COT with the network side device in the foregoing step S410 is as shown in FIG. 6 in a specific application scenario. In a given FBE scenario, specific examples in which the LTE performs active channel access and shares the COT with a gNB are as follows:
Case 2-1: After accessing the channel, the UE sends a Uu UL signal and an SL signal, and shares the COT with the gNB.
Case 2-2: After accessing the channel, the UE sends an SL signal and a Uu UL signal, and shares the COT with the gNB.

It should be noted that ED thresholds in the above different examples are different. In addition, although FIG. 6 shows only examples in the FBE channel access scenario, the examples in which the UE performs the active channel access and shares the COT with the gNB are also applicable to an LBE scenario.

Certainly, the foregoing another terminal may also receive the COT shared by the terminal.

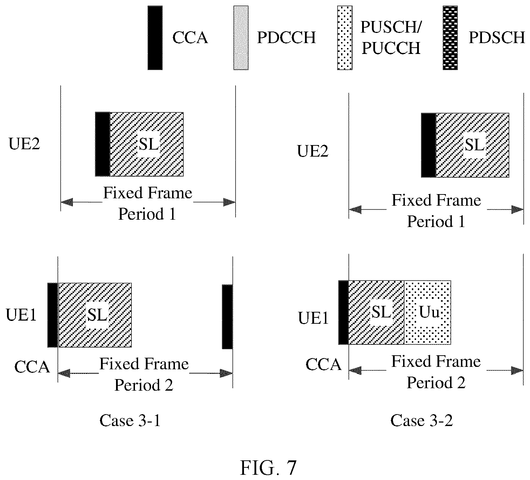

A mode of sharing the COT with another terminal in the foregoing step S210 is as shown in FIG. 7 in a specific application scenario. Specific examples are as follows:
Case 3-1: After accessing the channel, UE1 sends an SL signal, and shares the COT with UE2.
Case 3-2: After accessing the channel, UE1 sends an SL signal and a Uu signal, and shares the COT with UE2.

It should be noted that ED thresholds in the above different examples are different.

In another optional implementation of this embodiment of this application, in the case that the channel access for the unlicensed spectrum succeeds, the method in this embodiment of this application further includes at least one of the following:
(1) Send first control information to the network side device in a case that the terminal performs the channel access for the unlicensed spectrum successfully via a plurality of carriers or a plurality of LBT sub-bands, where the first control information may be used to indicate at least one of the following: a quantity of carriers shared with the network side device, a number of a carrier shared with the network side device, a quantity of LBT sub-bands shared to the network side device, and a number of an LBT sub-band shared with the network side device.

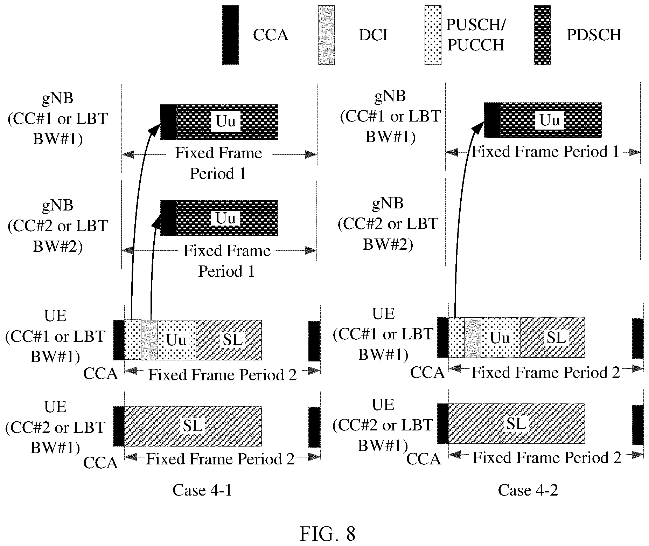

As shown in FIG. 8, in a specific application scenario, the mode is as follows: The UE performs active channel access on a plurality of CCs or LBT-BWs, and sends a Uu UL signal and/or SL signal. The UE informs, by sending uplink control information, the gNB that some or all of the CCs or LBT-BWs are shared with the gNB, where the uplink control information indicates a quantity and/or numbers of CCs or LBT-BWs that can be shared with the gNB. Specific embodiments are as follows:
Case 4-1: After accessing the channel on two LBT-BWs simultaneously, the UE sends a Uu UL signal and an SL signal, and informs, by using the uplink control information, the gNB that both the two LBT-BWs are shared with the gNB.
Case 4-2: After accessing the channel on two LBT-BWs simultaneously, the UE sends a Uu UL signal and an SL signal, and informs, by using the uplink control information, the gNB that one of the two LBT-BWs is shared with the gNB.

It should be noted that ED thresholds in the above different examples are different.

(2) Send second control information to another terminal in the case that the terminal performs the channel access successfully via a plurality of carriers or a plurality of LBT sub-bands, where the second control information may be used to indicate at least one of the following: a quantity of carriers shared with the network side device, a number of a carrier shared with the network side device, a quantity of LBT sub-bands shared to the network side device, and a number of an LBT sub-band shared with the network side device.

Certainly, the foregoing another terminal may also receive the second control information sent by the terminal.

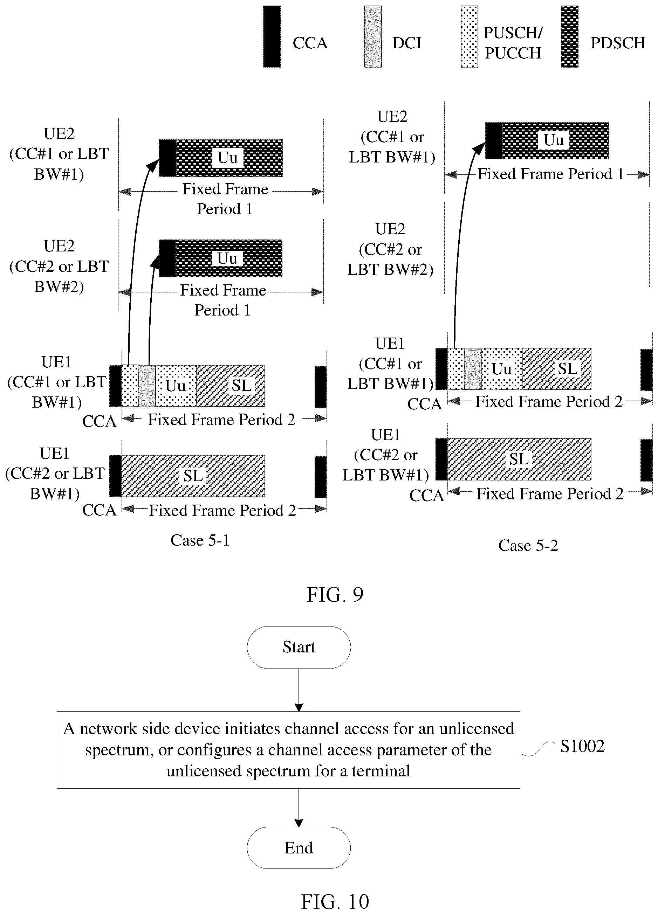

As shown in FIG. 9, in a specific application scenario, the mode is as follows: LTE1 performs active channel access on a plurality of CCs or LBT-BWs, and sends a Uu UL signal and/or SL signal. UE1 informs, by sending SL control information, UE2 that some or all of the CCs or LBT-BWs are shared with UE2, where the SL control information indicates a quantity and/or numbers of CCs or LBT-BWs that can be shared with UE2. Specific embodiments are as follows:
Case 5-1: After accessing the channel on two LBT-BWs simultaneously, UE1 sends a Uu UL signal and an SL signal, and informs, by using the SL control information, UE2 that both the two LBT-BWs are shared with UE2.
Case 5-2: After accessing the channel on two LBT-BWs simultaneously, UE1 sends a Uu UL signal and an SL signal, and informs, by using the SL control information, LTE2 that one of the two LBT-BWs is shared with UE2.

It should be noted that ED thresholds in the above different examples are different.

In an optional implementation of this embodiment of this application, sendable information and/or a sharing mode in this embodiment of this application is configured by the network side device, where the sendable information includes at least one of the following: the SL signal, the Uu signal, the first control information, and the second control information; and the sharing mode includes at least one of the following: a mode in which sharing the COT is not allowed, a mode in which the COT is shared with the network side device, and a mode in which the COT is shared with the another terminal.

In other words, whether the terminal sends only the SL signal or sends both the SL signal and the Uu signal in TDM mode and whether the first control information and the second control information are sent may be configured by the network side device. For example, although the terminal can send only the SL signal, or send the SL signal and the Uu signal in TDM mode, a sending process is configured by the network side device. In other words, if a network side configures only the SL signal, the terminal only needs to send the SL signal; or if the network side device is configured with the SL signal and the Uu signal, the terminal can send the SL signal and the Uu signal in TDM mode. A same processing mode is applied to the first control information and the second control information.

In addition, sharing modes are also similar. In other words, if the network side device is configured with only a mode of sharing the COT with the network side device, the terminal implements only the mode of sharing the COT with the network side device, and does not share the COT with other terminals. Certainly, if the network side device is configured with a mode in which the COT is not shared, the terminal does not perform a sharing operation.

It should be noted that sending processes of different information in this embodiment of this application may correspond to different ED thresholds. In other words, if it is configured by the network side device that the terminal can send a signal or information, each sending process of the signal or information may correspond to a different ED threshold. The ED threshold may be configured by the network side device, or independently determined by the terminal.

In a case that the ED threshold is configured by the network side device, the terminal is directly informed that processes of sending different information in the sendable information correspond to different ED thresholds, and that different sharing modes correspond to different ED thresholds, where the sendable information includes at least one of the following: the SL signal, the Uu signal, the first control information, and the second control information; and the sharing modes include at least one of the following: a mode in which sharing the COT is not allowed, a mode in which the COT is shared with the network side device, and a mode in which the COT is shared with the another terminal.

In a case that the ED threshold is independently determined by the terminal, the terminal needs to send indication information to the network side device, where the indication information is used to indicate an ED threshold and/or a sharing mode currently used by the terminal; and the sharing mode includes at least one of the following: a mode in which sharing the COT is not allowed, a mode in which the COT is shared with the network side device, and a mode in which the COT is shared with the another terminal.

The above describes a channel access process in this application from a terminal side. The following describes a channel access process in this application from a network side.

An embodiment of this application further provides a channel access method. The method is applied to a network side device. FIG. 10 is a second flowchart of the channel access method according to an embodiment of this application. As shown in FIG. 10, the method includes the following steps.

Step S 1002: Initiate channel access for an unlicensed spectrum, or configure a channel access parameter of the unlicensed spectrum for a terminal.

It can be learned that for the network side device, the channel access parameter may be configured for the terminal; or a channel access process may be directly initiated without configuring the channel access parameter for the terminal, and the terminal obtains a channel occupancy status of the network side device. The terminal can perform the channel access for the unlicensed spectrum in both the two modes.

Further, in a case that the channel access is initiated, the method further includes at least one of the following:
(1) Share first COT with the terminal after successfully initiating the channel access for the unlicensed spectrum, where the first COT is used by the terminal for sending an SL signal.
(2) Share second COT with the terminal after successfully initiating the channel access for the unlicensed spectrum, where the second COT is used by the terminal for sending an SL signal and a Uu signal.

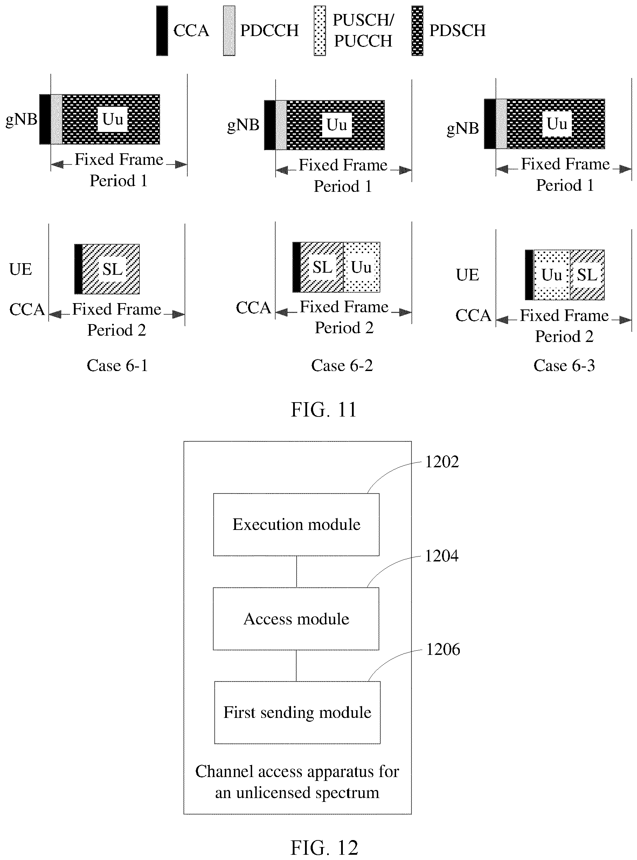

In other words, after the channel access succeeds, the network side device may share different COTs with the terminal, so that the terminal can send different signals. In a specific application scenario, the foregoing modes (1) and (2) are as shown in FIG. 11. In a given FBE scenario, specific examples in which a gNB performs active channel access and shares the COT with the LTE are as follows:
Case 6-1: After accessing a channel, the gNB shares the COT with the UE for sending of an SL signal.
Case 6-2: After accessing a channel, the gNB shares the COT with the LTE for sequential sending of an SL signal and a Uu UL signal.
Case 6-3: After accessing a channel, the gNB shares the COT with the LTE for sequential sending of a Uu UL signal and an SL signal.

It should be noted that ED thresholds in the above different cases are different. In addition, although FIG. 11 shows only examples in the FBE channel access scenario, the examples in which the gNB performs the active channel access and shares the COT with the LTE are also applicable to an LBE scenario.

It should be noted that different sharing modes correspond to different ED thresholds. The sharing modes include: a mode in which the first COT is shared with the terminal, and a mode in which the second COT is shared with the terminal.

In addition, in a case that the network side device has not actively initiated the channel access for the unlicensed spectrum, the network side device may receive first control information sent by the terminal, where the first control information is sent by the terminal to the network side device after successfully accessing the channel via a plurality of carriers or a plurality of LBT sub-bands; and the first control information is used to indicate a quantity of carriers or LBT sub-bands shared with the network side device and/or numbers of the carriers or LBT sub-bands.

The method in this embodiment of this application may further include:
Step S1004: The network side device configures sendable information and/or a sharing mode for the terminal.

The sendable information includes at least one of the following: the SL signal and the Uu signal.

The sharing mode includes at least one of the following: a mode in which sharing COT is not allowed, a mode in which the first COT is shared with the terminal, and a mode in which the second COT is shared with the terminal.

It should be noted that, the method in this embodiment of this application may further include the following steps:
Step S1006: The network side device may further configure that processes of sending different information in the sendable information correspond to different ED thresholds, and that different sharing modes correspond to different ED thresholds.
Step S1008: The network side device send second indication information to the terminal.

The second indication information is used to indicate an ED threshold and/or a sharing mode used by the terminal in an information sending process; the sendable information includes at least one of the following: the SL signal and the Uu signal; and the sharing mode includes at least one of the following: a mode in which sharing COT is not allowed, a mode in which the first COT is shared with the terminal, and a mode in which the second COT is shared with the terminal.

In this embodiment of this application, for a mode of configuring the channel access parameter for the terminal in step S1002, the method may further include: configuring a first channel access parameter and/or a second channel access parameter for the terminal, where the first channel access parameter is a parameter required by the terminal for performing SL channel access in load-based equipment LBE mode; and the second channel access parameter is a parameter required by the terminal for performing SL channel access in frame-based equipment FBE mode.

The first channel access parameter includes at least one of the following: clear channel assess CCA duration, contention window length, channel occupancy length, and energy detection ED threshold.

The second channel access parameter includes at least one of the following: frame start position, frame offset, frame period length, clear channel assess CCA duration, channel occupancy length, idle period length, and energy detection ED threshold.

Further, the configuring a channel access parameter for a terminal in the foregoing step S 1002 may further be: configuring a third channel access parameter corresponding to a working state of the terminal, where the working state includes an on-line working state and an off-line working state; and the channel access parameter includes the first channel access parameter and/or the second channel access parameter.

It should be noted that, the channel access method for an unlicensed spectrum provided in this embodiment of this application may be performed by a channel access apparatus for an unlicensed spectrum, or by a control module that is in the channel access apparatus for an unlicensed spectrum and that is configured to perform the channel access method for an unlicensed spectrum. In this embodiment of this application, that the channel access apparatus for an unlicensed spectrum performs the channel access method for an unlicensed spectrum is used as an example to describe a channel access apparatus for an unlicensed spectrum provided in the embodiments of this application.

An embodiment of this application provides a channel access apparatus for an unlicensed spectrum. FIG. 12 is a first schematic structural diagram of a channel access apparatus for an unlicensed spectrum according to an embodiment of this application. As shown in FIG. 12, the apparatus includes:
an execution module 1202, configured to execute a first event, where the first event is that a terminal receives a channel access parameter configured by a network side device for an unlicensed spectrum, or the first event is that the terminal obtains a channel occupancy status of the network side device for the unlicensed spectrum;
an access module 1204, configured to perform channel access for the unlicensed spectrum based on the first event; and
a first sending module 1206, configured to send a sidelink SL signal and/or a Uu signal in a case that the channel access for the unlicensed spectrum succeeds.

According to the channel access apparatus for an unlicensed spectrum in this embodiment of this application, a terminal may perform channel access for an unlicensed spectrum by receiving a channel access parameter configured by a network side device for an unlicensed spectrum; or the terminal may perform the channel access for the unlicensed spectrum by obtaining a channel occupancy status of the network side device for the unlicensed spectrum, and then send an SL signal and/or a Uu signal, to implement the channel access for the unlicensed spectrum, and increase available spectrum resources. This resolves the problem that the flexibility of available licensed bands is limited because available licensed bands in the prior art become increasingly less.

Optionally, the channel access parameter in this embodiment of this application includes at least one of the following: the first channel access parameter and the second channel access parameter.

The first channel access parameter is a parameter required by the terminal for performing channel access in load-based equipment LBE mode. Optionally, the first channel access parameter includes at least one of the following: clear channel assess CCA duration, contention window length, channel occupancy length, and energy detection ED threshold.

The second channel access parameter is a parameter required by the terminal for performing the channel access in frame-based equipment FBE mode. Optionally, the second channel access parameter includes at least one of the following: frame start position, frame offset, frame period length, clear channel assess CCA duration, channel occupancy length, idle period length, and energy detection ED threshold.

Optionally, the access module 1204 in this embodiment of this application performs the channel access for the unlicensed spectrum based on the first event in any one of the following modes: LBE mode and FBE mode.

Optionally, the execution module 1202 in this embodiment of this application includes: a receiving unit, configured to receive the channel access parameter configured by the network side device for the unlicensed spectrum based on a working state of the terminal, where the working state includes an on-line working state and an off-line working state, and the channel access parameter includes the first channel access parameter and/or the second channel access parameter.

Optionally, the first sending module 1206 in this embodiment of this application includes at least one of the following:
a first sending unit, configured to send the SL signal; and
a second sending unit, configured to send the SL signal and/or a Uu signal in a time division multiplexing TDM mode.

Optionally, in the case that the channel access for the unlicensed spectrum succeeds, the apparatus in this embodiment of this application may further include: an obtaining module, configured to obtain channel occupancy time COT; and a first sharing module, configured to share the COT with the network side device or another terminal.

Optionally, in the case that the channel access for the unlicensed spectrum succeeds, the apparatus in this embodiment of this application further includes at least one of the following:
a second sending module, configured to send first control information to the network side device in a case that the terminal performs the channel access for the unlicensed spectrum successfully via a plurality of carriers or a plurality of LBT sub-bands; and
a third sending module, configured to send second control information to another terminal in the case that the terminal performs the channel access successfully via the plurality of carriers or the plurality of LBT sub-bands, where each of the first control information and the second control information is used to indicate at least one of the following: a quantity of carriers shared with the network side device, a number of a carrier shared with the network side device, a quantity of LBT sub-bands shared to the network side device, and a number of an LBT sub-band shared with the network side device.

Optionally, sendable information and/or a sharing mode in this embodiment of this application is configured by the network side device, where the sendable information includes at least one of the following: the SL signal, the Uu signal, the first control information, and the second control information; and the sharing mode includes at least one of the following: a mode in which sharing the COT is not allowed, a mode in which the COT is shared with the network side device, and a mode in which the COT is shared with the another terminal.

Optionally, processes of sending different information in sendable information correspond to different ED thresholds, and different sharing modes correspond to different ED thresholds.

Optionally, the apparatus in this embodiment of this application may further include: a fourth sending module, configured to send first indication information to the network side device. The first indication information is used to indicate an ED threshold and/or a sharing mode currently used by the terminal. The sharing mode includes at least one of the following: a mode in which sharing the COT is not allowed, a mode in which the COT is shared with the network side device, and a mode in which the COT is shared with the another terminal.

The above describes a channel access process in this application by using an apparatus on a terminal side. The following describes a channel access process in the embodiments of this application by using an apparatus on a network side.

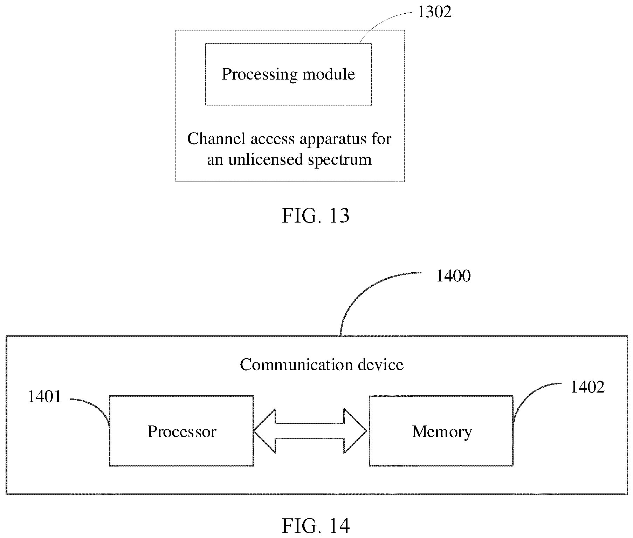

An embodiment of this application provides a channel access apparatus for an unlicensed spectrum. FIG. 13 is a second schematic structural diagram of the channel access apparatus for an unlicensed spectrum according to an embodiment of this application. As shown in FIG. 13, the apparatus includes:
a processing module 1302, configured to: initiate channel access for an unlicensed spectrum, or configure a channel access parameter of the unlicensed spectrum for a terminal.

Optionally, the apparatus in this embodiment of this application further includes at least one of the following: a second sharing module, configured to share first COT with the terminal after successfully initiating the channel access for the unlicensed spectrum, where the first COT is used by the terminal for sending an SL signal; and a third sharing module, configured to share second COT with the terminal after successfully initiating the channel access for the unlicensed spectrum, where the second COT is used by the terminal for sending an SL signal and a Uu signal.

Optionally, different sharing modes correspond to different ED thresholds, where the sharing modes include: a mode in which the first COT is shared with the terminal, and a mode in which the second COT is shared with the terminal.

Optionally, the apparatus in this embodiment of this application may further include: a receiving module, configured to receive first control information sent by the terminal, where the first control information is sent by the terminal to a network side device after successfully accessing a channel via a plurality of carriers or a plurality of LBT sub-bands, and is used to indicate a quantity of carriers or LBT sub-bands shared with the network side device and/or numbers of the carriers or LBT sub-bands.

Optionally, the apparatus further includes: a first configuration module, configured to configure sendable information and/or a sharing mode for the terminal, where the sendable information includes at least one of the following: the SL signal and the Uu signal, and the sharing mode includes at least one of the following: a mode in which sharing COT is not allowed, a mode in which the first COT is shared with the terminal, and a mode in which the second COT is shared with the terminal.

Optionally, the apparatus in this embodiment of this application may further include: a second configuration module, configured to configure that processes of sending different information in sendable information correspond to different ED thresholds, and that different sharing modes correspond to different ED thresholds; and a fifth sending module, configured to send second instruction information to the terminal.

The second indication information is used to indicate an ED threshold and/or a sharing mode used by the terminal in an information sending process; the sendable information includes at least one of the following: the SL signal and the Uu signal; and the sharing mode includes at least one of the following: a mode in which sharing COT is not allowed, a mode in which the first COT is shared with the terminal, and a mode in which the second COT is shared with the terminal.

Optionally, the processing module 1302 in this embodiment of this application may further include: a first configuration unit, configured to configure a first channel access parameter and/or a second channel access parameter for the terminal, where the first channel access parameter is a parameter required by the terminal for performing SL channel access in load-based equipment LBE mode; and the second channel access parameter is a parameter required by the terminal for performing SL channel access in frame-based equipment FBE mode.

The first channel access parameter includes at least one of the following: clear channel assess CCA duration, contention window length, channel occupancy length, and energy detection ED threshold. The second channel access parameter includes at least one of the following: frame start position, frame offset, frame period length, clear channel assess CCA duration, channel occupancy length, idle period length, and energy detection ED threshold.

Optionally, the first configuration unit may be further configured to configure a channel access parameter corresponding to a working state of the terminal, where the working state includes an on-line working state and an off-line working state; and the channel access parameter includes the first channel access parameter and/or the second channel access parameter.

The channel access apparatus for an unlicensed spectrum in this embodiment of this application may be an apparatus, or may be a component, an integrated circuit, or a chip in a terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), an automated teller machine, a self-service machine, or the like. This is not specifically limited in the embodiments of this application.

The channel access apparatus for an unlicensed spectrum in this embodiment of this application may be an apparatus having an operating system. The operating system may be an Android (Android) operating system, an iOS operating system, or another possible operating system, which is not specifically limited in the embodiments of this application.

The channel access apparatus for an unlicensed spectrum provided in this embodiment of this application can implement the processes implemented in the method embodiment in FIG. 4 or FIG. 10, with the same technical effects achieved. To avoid repetition, details are not described herein again.

Optionally, as shown in FIG. 14, an embodiment of this application further provides a communication device 1400, including a processor 1401, a memory 1402, and a program or instructions stored in the memory 1402 and executable on the processor 1401. For example, when the communication device 1400 is a terminal, the program or instructions are executed by the processor 1401 to implement the processes in the foregoing embodiments of the channel access method for an unlicensed spectrum, with the same technical effects achieved. When the communication device 1400 is a network side device, the program or instructions are executed by the processor 1401 to implement the processes in the foregoing embodiments of the channel access method for an unlicensed spectrum, with the same technical effects achieved. To avoid repetition, details are not described herein again.

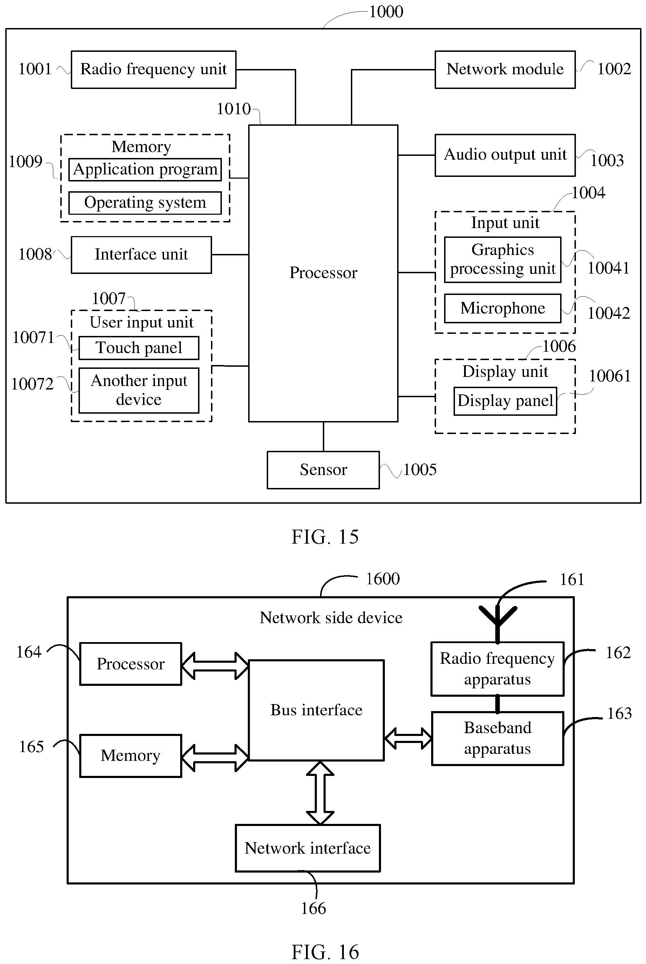

FIG. 15 is a schematic structural diagram of hardware of a terminal according to an embodiment of this application.

The terminal 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

A person skilled in the art can understand that the terminal 100 may further include a power supply (for example, a battery) supplying power to the components. The power supply may be logically connected to the processor 110 through a power management system. In this way, functions such as charge management, discharge management, and power consumption management are implemented through the power management system. The structure of the terminal shown in FIG. 15 does not constitute any limitation on the terminal. The terminal may include more or fewer components than those shown in the figure, or combine some components, or have different arrangements of components. Details are not further described herein.

It should be understood that in this embodiment of this application, the input unit 104 may include a graphics processing unit (Graphics Processing Unit, GPU) 1041 and a microphone 1042. The graphics processing unit 1041 processes image data of a static image or a video obtained by an image capture apparatus (for example, a camera) in a video capture mode or an image capture mode. The display unit 106 may include a display panel 1061. The display panel 1061 may be configured in a form of a liquid crystal display, organic light-emitting diodes, or the like. The user input unit 107 includes a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function button (for example, a volume control button or a power on/off button), a trackball, a mouse, and a joystick. Details are not described herein.

In this embodiment of this application, the radio frequency unit 101 receives downlink data from a network side device and sends the downlink data to the processor 110 for processing; and in addition, sends uplink data to the network side device. Generally, the radio frequency unit 101 includes but is not limited to an antenna, at least one amplifier, a transceiver, a coupler, a low noise amplifier, a duplexer, and the like.

The memory 109 may be configured to store software programs or instructions and various data. The memory 109 may mainly include a program/instruction storage area and a data storage area. The program/instruction storage area may store an operating system, an application program or instructions required by at least one function (for example, a sound playback function or an image display function), and the like. In addition, the memory 109 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 110 may include one or more processing units. Optionally, an application processor and a modem processor may be integrated into the processor 110. The application processor primarily processes the operating system, a user interface, the application program or instructions, and the like. The modem processor primarily processes wireless communication, for example, being a baseband processor. It can be understood that the modem processor may alternatively be not integrated into the processor 110.

The radio frequency unit 101 is configured to execute a first event, where the first event is that the terminal receives a channel access parameter configured by a network side device for an unlicensed spectrum, or the first event is that the terminal obtains a channel occupancy status of the network side device for the unlicensed spectrum.

The processor 110 is configured to perform channel access for the unlicensed spectrum based on the first event.

The radio frequency unit 101 is further configured to send a sidelink SL signal and/or a Uu signal in a case that the channel access for the unlicensed spectrum succeeds.

According to the terminal in this embodiment of this application, the terminal may perform channel access for an unlicensed spectrum by receiving a channel access parameter configured by a network side device for an unlicensed spectrum; or the terminal may perform the channel access for the unlicensed spectrum by obtaining a channel occupancy status of the network side device for the unlicensed spectrum, and then send an SL signal and/or a Uu signal, to implement the channel access for the unlicensed spectrum, and increase available spectrum resources. This resolves the problem that the flexibility of available licensed bands is limited because available licensed bands in the prior art become increasingly less.

Specifically, an embodiment of this application further provides a network side device. As shown in FIG. 16, a network device 1600 includes an antenna 161, a radio frequency apparatus 162, and a baseband apparatus 163. The antenna 161 is connected to the radio frequency apparatus 162. In an uplink direction, the radio frequency apparatus 162 receives information through the antenna 161, and sends the received information to the baseband apparatus 163 for processing. In a downlink direction, the baseband apparatus 163 processes to-be-sent information, and sends the information to the radio frequency apparatus 162. After processing the received information, the radio frequency apparatus 162 sends the information through the antenna 161.

The band processing apparatus may be located in the baseband apparatus 163. The method performed by the network side device in the foregoing embodiments may be implemented in the baseband apparatus 163. The baseband apparatus 163 includes a processor 164 and a memory 165.

The baseband apparatus 163 may include, for example, at least one baseband processing unit, where multiple chips are disposed on the baseband processing unit. As shown in FIG. 16, one of the chips is, for example, the processor 164, and connected to the memory 165, to invoke a program in the memory 165 to perform operations of the network device shown in the foregoing method embodiments.

The baseband apparatus 163 may further include a network interface 166 for exchanging information with the radio frequency apparatus 162. The interface is, for example, a common public radio interface (common public radio interface, CPRI).

Specifically, the network side device in this embodiment of this application further includes a program or instructions stored in the memory 165 and executable on the processor 164. The processor 164 invokes the program or instructions in the memory 165 to perform the method performed by the modules shown in FIG. 13, with the same technical effects achieved. To avoid repetition, details are not described herein again.

An embodiment of this application further provides a readable storage medium. The readable storage medium stores a program or instructions. When the program or instructions are executed by a processor, the processes in the foregoing embodiments of the channel access method for an unlicensed spectrum are implemented, with the same technical effects achieved. To avoid repetition, details are not described herein again.

The processor is a processor in the terminal in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions of a network side device to implement the processes in the foregoing embodiments of the channel access method for an unlicensed spectrum, with the same technical effects achieved. To avoid repetition, details are not described herein again.

It should be understood that the chip mentioned in this embodiment of this application may also be referred to as a system-level chip, a system chip, a chip system, or a system-on-chip.

It may be understood that the embodiments described in the present disclosure can be implemented by hardware, software, firmware, middleware, microcode, or a combination thereof. For implementation with hardware, modules, units, sub-modules, sub-units, and the like may be implemented in one or more application specific integrated circuits (Application Specific Integrated Circuit, ASIC), a digital signal processor (Digital Signal Processor, DSP), a digital signal processing device (DSP Device, DSPD), a programmable logic device (Programmable Logic Device, PLD), a field-programmable gate array (Field-Programmable Gate Array, FPGA), a general-purpose processor, a controller, a micro-controller, a micro-processor, another electronic unit for implementing the functions of this application, or a combination thereof.

It should be noted that in this specification, the term "include", "comprise", or any of their variants are intended to cover a non-exclusive inclusion, so that a process, a method, an article, or an apparatus that includes a list of elements includes not only those elements but also other elements that are not expressly listed, or further includes elements inherent to such process, method, article, or apparatus. In the absence of more restrictions, an element defined by "including a ..." does not exclude another same element in a process, method, article, or apparatus that includes the element. Furthermore, it should be noted that, in the scope of the method and apparatus in the embodiments of this application, execution of the functions are not limited to the order shown or described, and the functions may alternatively be executed in a substantially simultaneous mode or in a reverse order depending on the functions involved. For example, the described method may be performed in an order different from that described, and various steps may be added, omitted, or combined. In addition, features described with reference to some examples may be combined in other examples.

According to the description of the foregoing implementations, persons skilled in the art can clearly understand that the method in the foregoing embodiments may be implemented by software in addition to a necessary universal hardware platform or by hardware only. In most cases, the former is a more preferred implementation. Based on such an understanding, the technical solutions of this application essentially or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the foregoing specific implementations. The foregoing specific implementations are merely illustrative instead of restrictive. Under the enlightenment of this application, persons of ordinary skills in the art may make many forms without departing from the essence of this application and the scope of protection of claims, all of which fall within the protection of this application.

## Claims

1. A channel access method for an unlicensed spectrum, comprising:
executing, by a terminal, a first event, wherein the first event is that the terminal receives a channel access parameter configured by a network side device for an unlicensed spectrum, or the first event is that the terminal obtains a channel occupancy status of the network side device for the unlicensed spectrum;
performing, by the terminal, channel access for the unlicensed spectrum based on the first event; and
sending, by the terminal, a sidelink SL signal and/or a Uu signal in a case that the channel access for the unlicensed spectrum succeeds.

2. The method according to claim 1, wherein the channel access parameter comprises at least one of following:
a first channel access parameter and a second channel access parameter, wherein
the first channel access parameter is a parameter required by the terminal for performing channel access in load-based equipment LBE mode; and
the second channel access parameter is a parameter required by the terminal for performing channel access in frame-based equipment FBE mode.

3. The method according to claim 2, wherein
the first channel access parameter comprises at least one of following: clear channel assess CCA duration, contention window length, channel occupancy length, and energy detection ED threshold.

4. The method according to claim 2, wherein
the second channel access parameter comprises at least one of following: frame start position, frame offset, frame period length, clear channel assess CCA duration, channel occupancy length, idle period length, and energy detection ED threshold.

5. The method according to claim 1, wherein the channel access for the unlicensed spectrum is performed based on the first event in any one of following modes: LBE mode and FBE mode.

6. The method according to claim 2, wherein the receiving the channel access parameter configured by the network side device for the unlicensed spectrum comprises:
receiving, by the terminal, the channel access parameter configured by the network side device for the unlicensed spectrum based on a working state of the terminal, wherein the working state comprises an on-line working state and an off-line working state, and the channel access parameter comprises the first channel access parameter and/or the second channel access parameter.

7. The method according to claim 1, wherein the sending, by the terminal, the sidelink SL signal and/or Uu signal comprises at least one of following:
sending, by the terminal, only the SL signal; and
sending, by the terminal, the SL signal and/or Uu signal in a time division multiplexing TDM mode.

8. The method according to claim 1, wherein in the case that the channel access for the unlicensed spectrum succeeds, the method further comprises:
obtaining, by the terminal, channel occupancy time COT; and
sharing, by the terminal, the COT with the network side device or another terminal.

9. The method according to claim 1, wherein in the case that the channel access for the unlicensed spectrum succeeds, the method further comprises at least one of following:
sending, by the terminal, first control information to the network side device in a case that the terminal performs the access successfully via a plurality of carriers or a plurality of LBT sub-bands; and
sending, by the terminal, second control information to another terminal in the case that the terminal performs the access successfully via a plurality of carriers or a plurality of LBT sub-bands, wherein
each of the first control information and the second control information is used to indicate at least one of following: a quantity of carriers shared with the network side device, a number of a carrier shared with the network side device, a quantity of LBT sub-bands shared to the network side device, and a number of an LBT sub-band shared with the network side device.

10. The method according to any one of claims 7 to 9, wherein
sendable information and/or a sharing mode is configured by the network side device, wherein
the sendable information comprises at least one of following: the SL signal, the Uu signal, the first control information, and the second control information; and
the sharing mode comprises at least one of following: a mode in which sharing the COT is not allowed, a mode in which the COT is shared with the network side device, and a mode in which the COT is shared with the another terminal.

11. The method according to any one of claims 7 to 9, wherein
processes of sending different information in sendable information correspond to different ED thresholds, and different sharing modes correspond to different ED thresholds, wherein
the sendable information comprises at least one of following: the SL signal, the Uu signal, the first control information, and the second control information; and
the sharing modes comprise at least one of following: a mode in which sharing the COT is not allowed, a mode in which the COT is shared with the network side device, and a mode in which the COT is shared with the another terminal.

12. The method according to any one of claims 7 to 9, further comprising:
sending, by the terminal, first indication information to the network side device, wherein the first indication information is used to indicate an ED threshold and/or a sharing mode currently used by the terminal; and
the sharing mode comprises at least one of following: a mode in which sharing the COT is not allowed, a mode in which the COT is shared with the network side device, and a mode in which the COT is shared with the another terminal.

13. A channel access method for an unlicensed spectrum, comprising:
initiating, by a network side device, channel access for an unlicensed spectrum, or configuring, by the network side device, a channel access parameter of the unlicensed spectrum for a terminal.

14. The method according to claim 13, further comprising at least one of following:
sharing, by the network side device, first COT with the terminal after successfully initiating the channel access for the unlicensed spectrum, wherein the first COT is used by the terminal for sending an SL signal; and
sharing, by the network side device, second COT with the terminal after successfully initiating the channel access for the unlicensed spectrum, wherein the second COT is used by the terminal for sending an SL signal and a Uu signal.

15. The method according to claim 14, wherein different sharing modes correspond to different ED thresholds, and the sharing modes comprise: a mode in which the first COT is shared with the terminal, and a mode in which the second COT is shared with the terminal.

16. The method according to claim 13, further comprising:
receiving, by the network side device, first control information sent by the terminal, wherein the first control information is sent by the terminal to the network side device after successful access of a plurality of carriers or a plurality of LBT sub-bands; and the first control information is used to indicate at least one of following: a quantity of carriers shared with the network side device, a number of a carrier shared with the network side device, a quantity of LBT sub-bands shared to the network side device, and a number of an LBT sub-band shared with the network side device.

17. The method according to any one of claims 14 to 16, further comprising:
configuring, by the network side device, sendable information and/or a sharing mode for the terminal, wherein
the sendable information comprises at least one of following: the SL signal and the Uu signal; and
the sharing mode comprises at least one of following: a mode in which sharing COT is not allowed, a mode in which the first COT is shared with the terminal, and a mode in which the second COT is shared with the terminal.

18. The method according to any one of claims 14 to 16, further comprising:
configuring, by the network side device, that processes of sending different information in sendable information correspond to different ED thresholds, and that different sharing modes correspond to different ED thresholds, wherein
sending, by the network side device, second indication information to the terminal, wherein
the second indication information is used to indicate an ED threshold and/or a sharing mode used by the terminal in an information sending process; the sendable information comprises at least one of following: the SL signal and the Uu signal; and the sharing mode comprises at least one of following: a mode in which sharing COT is not allowed, a mode in which the first COT is shared with the terminal, and a mode in which the second COT is shared with the terminal.

19. The method according to claim 13, wherein the configuring, by the network side device, the channel access parameter for the terminal comprises:
configuring, by the network side device, a first channel access parameter and/or a second channel access parameter for the terminal, wherein the first channel access parameter is a parameter required by the terminal for performing SL channel access in load-based equipment LBE mode; and the second channel access parameter is a parameter required by the terminal for performing SL channel access in frame-based equipment FBE mode.

20. The method according to claim 19, wherein
the first channel access parameter comprises at least one of following: clear channel assess CCA duration, contention window length, channel occupancy length, and energy detection ED threshold; and
the second channel access parameter comprises at least one of following: frame start position, frame offset, frame period length, clear channel assess CCA duration, channel occupancy length, idle period length, and energy detection ED threshold.

21. The method according to claim 20, wherein the configuring, by the network side device, the channel access parameter for the terminal comprises:
configuring, by the network side device, a channel access parameter corresponding to a working state of the terminal, wherein the working state comprises an on-line working state and an off-line working state; and the channel access parameter comprises the first channel access parameter and/or the second channel access parameter.

22. A channel access apparatus for an unlicensed spectrum, comprising:
an execution module, configured to execute a first event, wherein the first event is that a terminal receives a channel access parameter configured by a network side device for an unlicensed spectrum, or the first event is that the terminal obtains a channel occupancy status of the network side device for the unlicensed spectrum;
an access module, configured to perform channel access for the unlicensed spectrum based on the first event; and
a first sending module, configured to send a sidelink SL signal and/or a Uu signal in a case that the channel access for the unlicensed spectrum succeeds.

23. The apparatus according to claim 22, wherein the channel access parameter comprises at least one of following:
a first channel access parameter and a second channel access parameter, wherein
the first channel access parameter is a parameter required by the terminal for performing channel access in load-based equipment LBE mode; and
the second channel access parameter is a parameter required by the terminal for performing channel access in frame-based equipment FBE mode.

24. The apparatus according to claim 23, wherein
the first channel access parameter comprises at least one of following: clear channel assess CCA duration, contention window length, channel occupancy length, and energy detection ED threshold.

25. The apparatus according to claim 24, wherein
the second channel access parameter comprises at least one of following: frame start position, frame offset, frame period length, clear channel assess CCA duration, channel occupancy length, idle period length, and energy detection ED threshold.

26. The apparatus according to claim 22, wherein the access module performs the channel access for the unlicensed spectrum based on the first event in any one of following modes: LBE mode and FBE mode.

27. The apparatus according to claim 23, wherein the execution module comprises:
a receiving unit, configured to receive the channel access parameter configured by the network side device for the unlicensed spectrum based on a working state of the terminal, wherein the working state comprises an on-line working state and an off-line working state, and the channel access parameter comprises the first channel access parameter and/or the second channel access parameter.

28. The apparatus according to claim 22, wherein the first sending module comprises at least one of following:
a first sending unit, configured to send the SL signal; and
a second sending unit, configured to send the SL signal and/or Uu signal in a time division multiplexing TDM mode.

29. The apparatus according to claim 22, wherein in the case that the channel access for the unlicensed spectrum succeeds, the apparatus further comprises:
an obtaining module, configured to obtain channel occupancy time COT; and
a first sharing module, configured to share the COT with the network side device or another terminal.

30. The apparatus according to claim 22, wherein in the case that the channel access for the unlicensed spectrum succeeds, the apparatus further comprises at least one of following:
a second sending module, configured to send first control information to the network side device in a case that the terminal performs the access successfully via a plurality of carriers or a plurality of LBT sub-bands; and
a third sending module, configured to send second control information to another terminal in the case that the terminal performs the access successfully via a plurality of carriers or a plurality of LBT sub-bands, wherein
each of the first control information and the second control information is used to indicate at least one of the following: a quantity of carriers shared with the network side device, a number of a carrier shared with the network side device, a quantity of LBT sub-bands shared to the network side device, and a number of an LBT sub-band shared with the network side device.

31. The apparatus according to any one of claims 28 to 30, wherein
sendable information and/or a sharing mode is configured by the network side device, wherein
the sendable information comprises at least one of following: the SL signal, the Uu signal, the first control information, and the second control information; and
the sharing mode comprises at least one of following: a mode in which sharing the COT is not allowed, a mode in which the COT is shared with the network side device, and a mode in which the COT is shared with the another terminal.

32. The apparatus according to any one of claims 28 to 30, wherein
processes of sending different information in sendable information correspond to different ED thresholds, and different sharing modes correspond to different ED thresholds, wherein
the sendable information comprises at least one of following: the SL signal, the Uu signal, the first control information, and the second control information; and
the sharing modes comprise at least one of following: a mode in which sharing the COT is not allowed, a mode in which the COT is shared with the network side device, and a mode in which the COT is shared with the another terminal.

33. The apparatus according to any one of claims 28 to 30, further comprising:
a fourth sending module, configured to send first indication information to the network side device, wherein the first indication information is used to indicate an ED threshold and/or a sharing mode currently used by the terminal; and
the sharing mode comprises at least one of following: a mode in which sharing the COT is not allowed, a mode in which the COT is shared with the network side device, and a mode in which the COT is shared with the another terminal.

34. A channel access apparatus for an unlicensed spectrum, comprising:
a processing module, configured to: initiate channel access for an unlicensed spectrum, or configure a channel access parameter of the unlicensed spectrum for a terminal.

35. The apparatus according to claim 34, further comprising at least one of following:
a second sharing module, configured to share first COT with the terminal after successfully initiating the channel access for the unlicensed spectrum, wherein the first COT is used by the terminal for sending an SL signal; and
a third sharing module, configured to share second COT with the terminal after successfully initiating the channel access for the unlicensed spectrum, wherein the second COT is used by the terminal for sending an SL signal and a Uu signal.

36. The apparatus according to claim 35, wherein different sharing modes correspond to different ED thresholds, and the sharing modes comprise: a mode in which the first COT is shared with the terminal, and a mode in which the second COT is shared with the terminal.

37. The apparatus according to claim 34, further comprising:
a receiving module, configured to receive first control information sent by the terminal, wherein the first control information is sent by the terminal to a network side device after successfully accessing a channel via a plurality of carriers or a plurality of LBT sub-bands; and the first control information is used to indicate at least one of following: a quantity of carriers shared with the network side device, a number of a carrier shared with the network side device, a quantity of LBT sub-bands shared to the network side device, and a number of an LBT sub-band shared with the network side device.

38. The apparatus according to any one of claims 35 to 37, further comprising:
a first configuration module, configured to configure sendable information and/or a sharing mode for the terminal, wherein
the sendable information comprises at least one of following: the SL signal and the Uu signal; and
the sharing mode comprises at least one of following: a mode in which sharing COT is not allowed, a mode in which the first COT is shared with the terminal, and a mode in which the second COT is shared with the terminal.

39. The apparatus according to any one of claims 35 to 37, further comprising:
a second configuration module, configured to configure that processes of sending different information in sendable information correspond to different ED thresholds, and that different sharing modes correspond to different ED thresholds; and
a fifth sending module, configured to send second instruction information to the terminal, wherein
the second indication information is used to indicate an ED threshold and/or a sharing mode used by the terminal in an information sending process; the sendable information comprises at least one of following: the SL signal and the Uu signal; and the sharing mode comprises at least one of following: a mode in which sharing COT is not allowed, a mode in which the first COT is shared with the terminal, and a mode in which the second COT is shared with the terminal.

40. The apparatus according to claim 34, wherein the processing module comprises:
a first configuration unit, configured to configure a first channel access parameter and/or a second channel access parameter for the terminal, wherein the first channel access parameter is a parameter required by the terminal for performing SL channel access in load-based equipment LBE mode; and the second channel access parameter is a parameter required by the terminal for performing SL channel access in frame-based equipment FBE mode.

41. The apparatus according to claim 40, wherein
the first channel access parameter comprises at least one of following: clear channel assess CCA duration, contention window length, channel occupancy length, and energy detection ED threshold; and
the second channel access parameter comprises at least one of following: frame start position, frame offset, frame period length, clear channel assess CCA duration, channel occupancy length, idle period length, and energy detection ED threshold.

42. The apparatus according to claim 41, wherein
the first configuration unit is configured to configure a channel access parameter corresponding to a working state of the terminal, wherein the working state comprises an on-line working state and an off-line working state; and the channel access parameter comprises the first channel access parameter and/or the second channel access parameter.

43. A terminal, comprising a processor, a memory, and a program or instructions stored in the memory and executable on the processor, wherein when the program or instructions are executed by the processor, the steps of the channel access method for an unlicensed spectrum according to any one of claims 1 and 12 are implemented.

44. A network side device, comprising a processor, a memory, and a program or instructions stored in the memory and executable on the processor, wherein when the program or instructions are executed by the processor, steps of the channel access method for an unlicensed spectrum according to any one of claims 13 and 21 are implemented.

45. A readable storage medium, wherein the readable storage medium stores a program or instructions, and when the program or instructions are executed by a processor, steps of the channel access method for an unlicensed spectrum according to any one of claims 1 to 12 or the steps of the channel access method for an unlicensed spectrum according to any one of claims 13 and 21 are implemented.

46. A chip, comprising a processor and a communication interface, wherein the communication interface is coupled to the processor, and the processor is configured to run a program or instructions, to implement the channel access method for an unlicensed spectrum according to any one of claims 1 to 12 or implement the channel access method for an unlicensed spectrum according to any one of claims 13 to 21.
